# EUROPÄISCHE PATENTSCHRIFT

(11) **EP 1 812 247 B1**
(45) Veröffentlichungstag und Bekanntmachung des Hinweises auf die Patenterteilung: **04.05.2011**
(21) Anmeldenummer: 05819549.6
(22) Anmeldetag: 11.11.2005
(51) Int. Cl.: B60B 27/00

(54) **EINHEIT AUS EINER RADLAGERUNG UND AUS WENIGSTENS EINEM FAHRZEUGSEITIG FESTEN TRÄGER**
UNIT COMPRISING A WHEEL BEARING AND AT LEAST ONE VEHICLE-SIDED FIXED SUPPORT
UNITE CONSTITUEE D'UN PALIER DE ROUE ET D'AU MOINS UN SUPPORT FIXE COTE VEHICULE

(30) Priorität: 16.11.2004 DE 102004055204
(43) Veröffentlichungstag der Anmeldung: 01.08.2007
(73) Patentinhaber: Schaeffler Technologies GmbH & Co. KG, 91074 Herzogenaurach (DE)
(72) Erfinder: NIEBLING, Peter, 97688 Bad Kissingen (DE); RUOFF, Gottfried, 97464 Oberwerrn (DE); DÖPPLING, Horst, 91074 Herzogenaurach (DE); DLUGAI, Darius, 97421 Schweinfurt (DE); STOPP, Ralf, 77815 Bühl (DE)
(86) Internationale Anmeldenummer: PCT/DE2005/002036
(87) Internationale Veröffentlichungsnummer: WO 2006/053533

(56) Entgegenhaltungen:
- EP-A- 0 794 072
- EP-A- 1 424 217
- DE-A1- 3 823 442
- DE-U1- 20 108 362
- US-A- 2 019 464
- US-A1- 2003 077 016
- US-B1- 6 293 704

## Beschreibung

### Gebiet der Erfindung

Die Erfindung betrifft eine Einheit aus einer Radlagerung und aus wenigstens einem fahrzeugseitig festen Träger, wobei die Radlagerung mit mindestens einem Außenteil fest in wenigstens einem als axialer Durchgang eines Blechformteils des Trägers ausgebildeten Lagersitz sitzt, und wobei wenigstens ein Endabschnitt des Außenteils zumindest durchgangsnah plastisch so radial umgelegt ist, dass der Endabschnitt den Träger axial hintergreift.

### Hintergrund der Erfindung

Eine derartige Einheit ist in EP 1 424 217 A2 näher beschrieben. Der Träger ist aus zwei schalenförmig umgeformten Trägerelementen aus Blech gebildet. Jedes der Trägerelemente weist einen der Lagersitze auf, der als axialer Durchgang durch das jeweilige der Trägerelemente aus dem Randbereich des Trägerelementes hülsenförmig ausgeformt ist. In diesem Fall ist die Innenkontur des Lagersitzes hohlzylindrisch ausgebildet und damit über die gesamte axiale Breite mit einem durchgehend unverändert gleichen Innenquerschnitt versehen. In die Lagersitze ist der Außenring eingeführt, der aufgrund der Gestalt und Anordnung der Lagersitze eine außen durchgängig zylindrische Form aufweisen muss. An dem Außenring sind Endabschnitte so umgelegt, dass diese den Träger spielfrei axial zwischen sich einklemmen. Die Klemmkraft wird beim radialen plastischen Umlegen von Endabschnitten aus dem Material des Außenringes erzeugt.

### Zusammenfassung der Erfindung

Zu dem Zeitpunkt, an dem die Erfindung gemacht wurde, bestand die Aufgabe, eine Einheit aus einem Träger und der Radlagerung zu schaffen, bei der insbesondere der Lagersitz einfach und kostengünstig hergestellt und robust ausgeführt werden kann.

Die Aufgabe ist mit den Merkmalen des kennzeichnenden Teiles des Anspruches 1 und weiterer Ansprüche gelöst.

Der Durchgang weist eine radiale Engstelle auf. Der radiale Innenquerschnitt des Durchgangs nimmt zumindest an einem Innenabschnitt des Durchgangs mit abnehmendem axialen Abstand zu der Engstelle hin zunehmend ab, d.h. der freie Durchgang des Lagersitzes wird zur Engstelle hin zunehmend enger. Anders ausgedrückt wird der Innenquerschnitt, von der Engstelle aus, mit zunehmender axialer Entfernung von der Engstelle größer und weist somit eine von einer innenzylindrischen Gestalt abweichende Innenkontur auf.

Die axiale Richtung ist die mit der Lagermittelsachse gleichgerichtete Richtung. Der Durchgang ist in der Regel rotationssymmetrisch. Die Breite des sich zunehmend verengenden Innenabschnittes ist zumindest so ausgelegt, dass der axiale Abstand von der Stelle aus, von der der Innenquerschnitt in Richtung der Engstelle abzunehmen beginnt, zumindest der Hälfte der mit der Lagerdrehachse gleichgerichteten maximalen axialen Breite des Durchgangs entspricht. Die Außenkontur des Außenteils ist der Innenkontur des Durchganges angepasst so ausgebildet, dass die von dem Lagersitz umfasste Außenkontur eines in dem Lagersitz sitzenden Außenteils der Radlagerung zumindest an der Engstelle an der Innenkontur des Durchgangs anliegt.

Die von dem Lagersitz umfasste Außenkontur eines in dem Lagersitz sitzenden Außenteils der Radlagerung liegt an der Innenkontur an, d.h., dass die Außenkontur dem Verlauf der Innenkontur zumindest in radiale Richtung angepasst ist. Demnach weisen sowohl die Innenkontur und die Außenkontur jeweils eine von der kreiszylindrischen Gestalt abweichende Innenkontur auf, wobei die Konturen, wie zuvor schon erwähnt, miteinander korrespondieren können aber nicht müssen.

Diese Innenkontur kann beispielsweise durch die Innenkontur eines Hohlkegelstumpfes beschrieben sein. In eine derartige Kontur wird dann das Außenteil eingepresst, dass eine entsprechend angepasste konische Außenkontur zumindest an dem Lagersitz aufweist. Nach der Erfindung ist vorgesehen, dass die Innenkontur so ballig ausgebildet ist, dass die Innenkontur zumindest an der Engstelle um die Lagerachse umlaufend radial am weitesten in den Durchgang hineinragt.

Das Außenteil weist am Lagersitz vorzugsweise zumindest an der Seite, wo der Endabschnitt radial umgelegt ist, eine mit der Innenkontur des Durchgangs korrespondierende plastisch gegen die Innenkontur verformte Außenkontur auf.

In einem derartig gestalteten Lagersitz werden auch höchste axial wirkende Kräfte bei der Montage des Außenteils in den Träger und auch im Fahrbetrieb des Fahrzeuges aufgenommen. Der vorrichtungstechnische Aufwand bei der Montage ist reduziert, da die Engstelle in dem Durchgang einen Axialanschlag für die Lage des Außenringes an sich bildet und auch die Umformkräfte, die aus dem plastischen Umlegen des Endabschnittes des Außenteils resultieren, in den Träger leitet.

Das Außenteil ist eine Trag- bzw. Adapterhülse zwischen wenigstens einem Außenring der Radlagerung und dem jeweiligen Trägerelement, in der der Außenring aufgenommen ist. Der Träger nimmt wahlweise eine Radlagerung aus ein oder mindestens zwei ein- oder mehrreihigen Lagern mit einem oder mehreren Lageraußen-/ Innenringen auf. Alternativ ist das Außenteil ein Außenring der Radlagerung mit wenigstens einer Laufbahn jedoch in der Regel mit zwei oder mit mehr Laufbahnen für Wälzkörper. Der Außenring ist zumindest außen an dem Außenabschnitt in dem Lagersitz um die Rotationsachse der Radlagerung rotationssymmetrisch ausgebildet.

Die Träger bzw. die Trägerelemente mit einem erfindungsgemäßen Lagersitz sind einfach herzustellen. Ebenso ist die unlösbare Verbindung zwischen der Radlagerung und dem Träger einfach herzustellen, da die Radlagerung vor der endgültigen axialen Sicherung in einem oder wahlweise zwei der Sitze genau positioniert und gehalten ist, ohne dass besondere Aufwendungen für die Lagefixierung der Bauteile zueinander betrieben werden müssen.

Der Träger liegt alternativ an zwei, vorzugsweise axial, also richtungsgleich mit der Lagerdrehachse der Radlagerung, voneinander weg gewandten Anschlägen fest an. Die Anschläge sind relativ zu dem Außenring an dem Außenring oder an einem Außenteil fest. Wenn die Anschläge an einem Außenteil fest sind, ist wenigstens ein Außenring des Radlagers in dem Außenteil beliebiger Gestalt aufgenommen. Wenigstens einer der Anschläge ist an dem Außenteil oder vorzugsweise an Außenring als separates Teil, beispielsweise in Form eines Sicherungsringes/einer Sicherungsscheibe für Wellensitze, fest oder ist einteilig an dem Außenring ausgebildet.

Der Außenring ist spanabhebend bearbeitet oder aber auch ein Kaltumformteil, in dem zwei der Laufbahnen ausgebildet sind. Jeder der Endabschnitte geht von einem Grundkörper des Außenringes aus axial in eine andere Richtung ab.

Der jeweilige Anschlag ragt soweit radial über den Endabschnitt hinaus, dass der Träger zumindest mit einem Teil der Randzone des Lagersitzes an dem Träger axial an dem Anschlag anschlägt. Dazu korrespondiert die Innenkontur des Lagersitzes mit dem jeweiligen Anschlag so, dass der Axialanschlag auch unter hohen Lasten immer an der Randzone des Lagersitzes anliegt und nicht unbeabsichtigt in den Lagersitz hinein oder durch diese hindurchgedrückt wird.

Dem Anschlag liegt auf der anderen Seite der Wandung des Trägers ein radial von dem Endabschnitt weg geformtes Ende aus dem Material des Endabschnittes gegenüber. Dieses Ende ragt radial ebenso, wie der auf der anderen Seite der Wandung gegenüberliegende Anschlag, radial soweit in die Randzone, dass eine sichere Verbindung zwischen dem Träger und dem Radlager an der Lagersitz hergestellt ist. Denkbar ist auch, dass das radial aus dem Endabschnitt geformte Ende innerhalb der jeweiligen Lagersitz an der Randzone einer Durchgangsöffnung in der Lagersitz axial anliegt und somit axial nicht bzw. nur teilweise aus der Lagersitz herausragt. Die Anschläge sind vorzugsweise Kreisringflächen.

Die Innenkonturen der Lagersitze und die Außenkonturen der Endabschnitte sind beliebig in allen denkbaren miteinander korrespondierenden Formen ausgeführt, aber vorzugsweise zur Lagerdrehachse der Radlagerung rotationssymmetrisch ausgebildet. Es ist auch denkbar, dass der Außenring in dem Träger mittels formschlüssig ineinander greifender Mittel in Umfangsrichtung um die Rotationsachse des Radlagers gegen Verdrehen gesichert ist. Diese formschlüssigen Mittel sind an dem Endabschnitt bzw, an dessen umgeformten Ende oder auch an dem Axialanschlag ausgebildet. Mit diesen formschlüssigen Mitteln korrespondieren formschlüssige Gegenmittel an dem Lagersitz oder an der Randzone des betroffenen Lagersitzes. Die Mittel sind ein oder mehrere radial oder axial hervor- bzw. zurückstehende und entsprechend formschlüssig ineinander eingreifende Sicherungsmittel wie zum Beispiel miteinander im Eingriff stehende Verzahnungen.

Das Ende ist vorzugsweise ein Bördelbund, auch Wälznietbund genannt. Ein derartiger Bund ist durch plastisches Verformen eines zunächst radial von dem Endabschnitt abstehenden Ringabschnittes aus dem Material des Endabschnittes erzeugt. Die Endabschnitte sind dazu vor der Befestigung des Außenringes in den Lagersitze in axiale Richtung länger als die jeweilige einem der Endabschnitte zugeordneten sowie lochförmig ausgebildeten Lagersitze axial breit sind. Der so axial an der von dem Anschlag abgewandten Seite des Träges aus der Lagersitz über den Träger hinausragende Anteil an Material der Endabschnitte bildet nach der Befestigung des Außenringes an dem Träger die radial umgelegten Enden.

Das Material wird der Endabschnitte wird bei der Befestigung des Außenringes in dem Träger radial nach außen so verdrängt und verformt, dass durch das jeweilige Ende ein rotationssymmetrisch zur Rotationsachse des Radlagers sowie einteilig mit dem Endabschnitt ausgebildeter Nietbund/Kopf geformt ist, der radial über die Außenmantelfläche des in dem Durchgangsloch verbleibenden Abschnittes an dem Endabschnitt hinaus ragt. Der Außendurchmesser der Endabschnitte verringert sich zumindest an dem für das Umformen des Endes vorgesehenen Ringabschnitt vor dem radialen Umlegen der Enden mit zunehmenden Abstand von dem jeweiligen Axialanschlag. Die Wandstärke der vor dem radialen Umlegen der Enden zur Rotationsachse des Radlagers rotationssymmetrisch ausgebildeten Endabschnitte nimmt vor dem radialen Umlegen der Enden mit zunehmenden axialen Abstand zu den Anschlägen ab. Durch derartige Maßnahmen können beispielsweise die Umformkräfte und der Umformgrad beim Wälznieten optimal angepasst werden. Die Außenkontur der Endabschnitte ist vor dem radialen Umlegen der Enden in einem Längsschnitt durch den Endabschnitt entlang der Rotationsachse des Radlagers betrachtet, gekrümmt oder verläuft zum Ende hin geradlinig abfallend.

Der Träger ist bevorzugt aus wenigstens einem Umformteil aus Blech, vorzugsweise aus einem Kaltumformverfahren. Die Lagersitz ist ein Durchgangsloch in dem Blech des Trägers. Das Radlager ist dabei mittels wenigstens eines Trägers oder mittels zwei oder mehr untereinander verbundener oder nicht direkt miteinander Trägerelemente mit dem Fahrzeug verbunden, wobei zwei Trägerelemente jeweils mit einer der Lagersitze versehen sind. Das Radlager ist zum Beispiel bevorzugt in einem Träger gehalten, der aus mindestens zwei schalenförmig ausgebildeten Umformteilen aus Blech ist. Diese Umformteile sind zum Beispiel miteinander verschweißt oder vernietet. Für den Träger und seine Elemente wird vorzugsweise Blech geringer Wandstärke eingesetzt um das Gewicht der Einheit so gering wie möglich zu halten. Derartige Schalen erhalten durch entsprechende Gestaltung hohe Stabilität.

Insbesondere dann, wenn dünnes Blech für den Träger oder die Trägerelemente eingesetzt wird, ist, wie eine Ausgestaltung der Erfindung vorsieht, der Lagersitz in einer Doppelung des Bleches ausgebildet. Die Doppelung des Bleches ist durch den Rand der Lagersitz gebildet, der bei der Herstellung des Trägers zunächst in axiale Richtung um ca. 90° zum Blech durchgestellt und dann schließlich radial von der Mittelachse der Lagersitz weggerichtet umgelegt und gegen den Träger angelegt wird.

Die Lagersitz ist innen durch eine von einer kreiszylindrischen Form abweichende Innenmantelfläche begrenzt. Die Innenmantelfläche ist demnach alternativ innenkonisch oder ballig ausgebildet.

Die Reihenfolge der Montage des Trägers oder seiner Elemente an einen Außenring mit zwei voneinander abgewandten Anschlägen und jeweils einem von dem jeweiligen Anschlag abgehenden der Endabschnitte ist von dem Aufbau des Trägers abhängig. Die Montage zwei voneinander unabhängiger Trägerelemente ist einfach, da jedes der Trägerelemente an seiner Lagersitz auf einen der Endabschnitte aufgeschoben und dann durch Umlegen des Endabschnittes befestigt wird. Die Trägerelemente sind danach entweder einzeln und voneinander getrennt an dem Außenring fest oder werden dann in einem nachfolgenden Schritt noch untereinander zu einem gemeinsamen Träger miteinander verbunden.

### Beschreibung der Zeichnungen

Nachfolgend wird die Erfindung anhand von Ausführungsbeispielen näher erläutert.

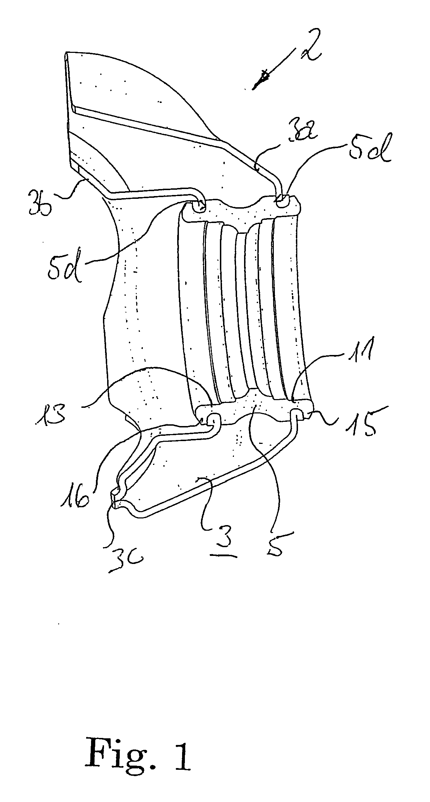

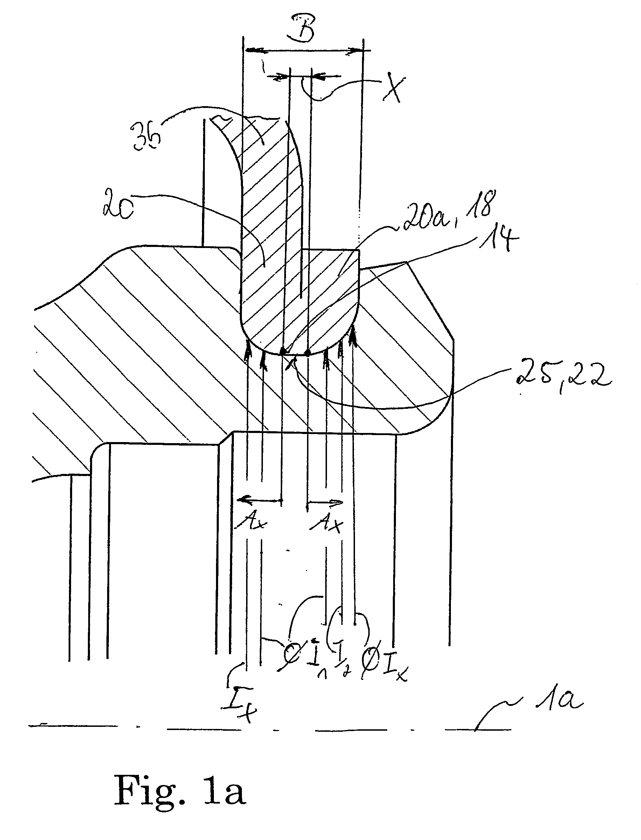

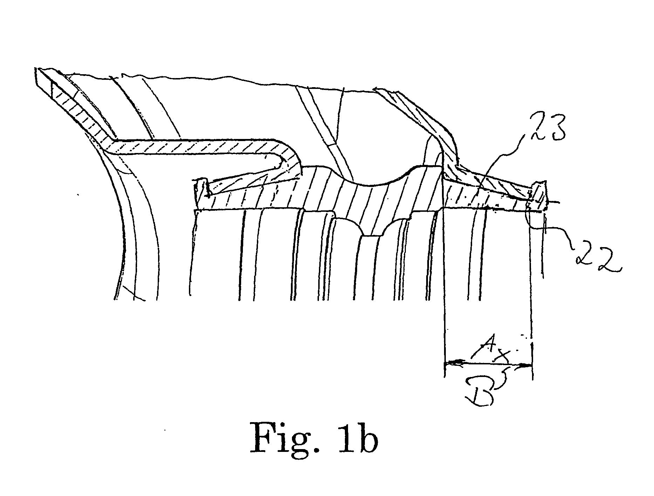

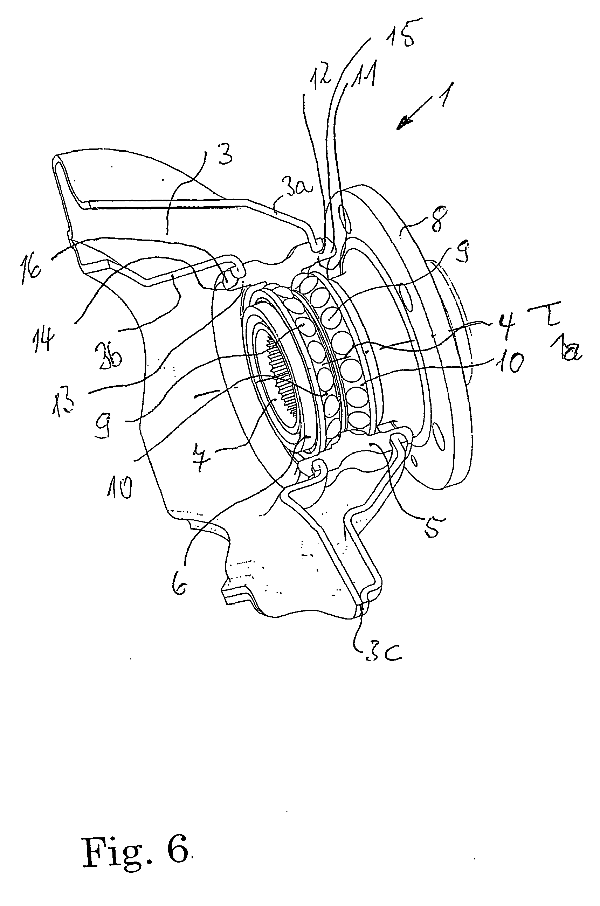

Figur 6 zeigt eine Einheit 1 aus einem Träger 3 und einer Radlagerung 4 in einer teilweise geschnittenen Gesamtansicht. In Figur 1 ist eine fertig montierte Baugruppe 2 der Einheit 1 nach Figur 1 dargestellt. Die Baugruppe 2 besteht aus dem Träger 3 und aus einem Außenteil in Form des Außenringes 5 des Radlagers 4.

Figur 1 a zeigt den Lagersitz 14 des Außenringes 5 in dem Träger 3 als vergrößert dargestelltes Detail. In Figur 1b ist eine alternative Ausgestaltung eines Lagersitzes 23 dargestellt.

Die Figuren 2 und 3 zeigen den Träger 3 bzw. den Außenring 5. In den Figuren 4, 5a und 5b sind einzelne Schritte des erfindungsgemäßen Verfahrens zur Montage der der Baugruppe 2 dargestellt. Die Figuren 1 bis 5 sind Schnittdarstellungen in einem Längsschnitt entlang der Lagerdrehachse 1a der Einheit 1.

Die Radlagerung 4, in diesem Fall vom Typ eines zweireihigen Schrägkugellagers, ist durch den Außenring 5, Innenringe 6 auf einer Nabe 7 mit einem Flansch 8 und durch zwei Reihen Wälzkörper 9 in Käfigen 10 gebildet. Die Erfindung gilt auch für die Anwendung an Einheiten mit Rollenlagern.

Das Radlager 4 ist mittels eines ersten Endabschnittes 11 in einer ersten Lagersitz 12 und mittels eines zweiten Endabschnittes 13 in einer zweiten Lagersitz 14 in beide mit der Lagerdrehachse 1a gleichgerichteten axiale Richtungen des Radlagers 4 gehalten. Dazu greift jeder der Endabschnitte 11 bzw. 13 axial in jeweils einen der Lagersitze 12 bzw. 14 ein. Der Außenring 5 ist durch jeweils ein an jedem der Endabschnitte 11 bzw. 13 radial umgelegtes Ende 15 bzw. 16 unbeweglich zu dem Träger 3 an dem Träger 3 gehalten.

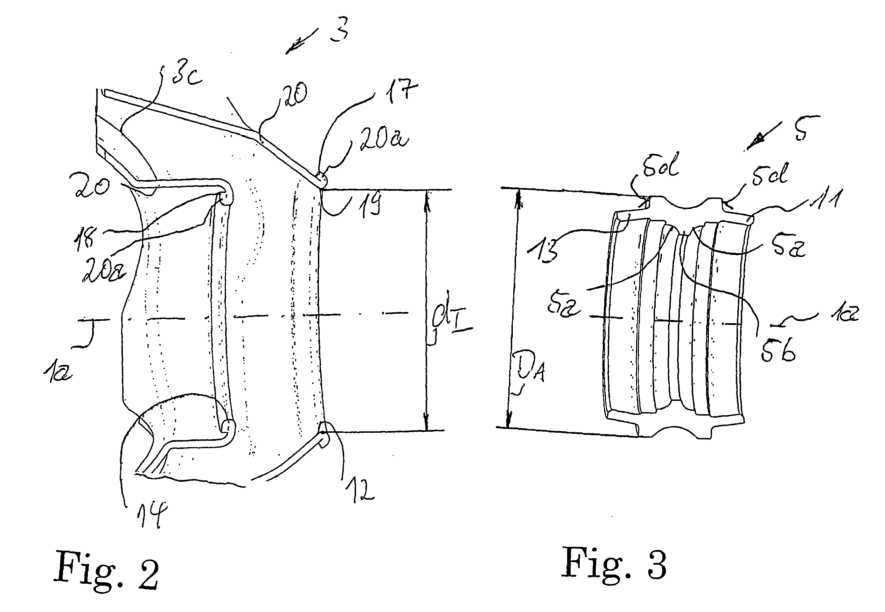

Der in Figur 3 als Einzelteil dargestellte Außenring 5 weist zwei Laufbahnen 5a für die Wälzkörper 9 auf. Die Laufbahnen 5a sind zumindest teilweise an einem radial in Richtung der Lagerdrehachse 1 a hervorstehenden Mittelbord 5b ausgebildet. Der Außenring 5 ist bevorzugt ein Kaltumformteil und ist einteilig mit den Endabschnitten 11 und 13 ausgebildet. Jeder der Endabschnitte 11 und 13 erstreckt sich von einem an dem Grundkörper 5c ausgebildeten Anschlag 5d des Außenringes 5 aus gleichgerichtet mit der Rotationsachse in eine der axialen Richtungen. Die Anschläge 5d sind jeweils in eine der axialen Richtungen gewandte Kreisringflächen.

Die Endabschnitte 11 und 13 sind zumindest vor dem radialen Umlegen der Enden 15 und 16 so rotationssymmetrisch zur Rotationsachse 1 a des Radlagers 4 ausgebildet, dass die Außenkontur der Endabschnitte 11 und 13 mit zunehmenden Abstand von dem jeweiligen Axialanschlag 5d im Außendurchmesser kleiner wird. Die radiale Wandstärke der Endabschnitte 11 und 13 nimmt mit zunehmenden axialen Abstand zu den Anschlägen 5d ab. Dabei fällt die Außenkonturlinie zu dem freien axialen Ende hin gekrümmt ab.

Der beschriebenen Außenring 5 ist rotationssymmetrisch und axialsymmetrisch ausgebildet. Es ist auch denkbar, dass ein derartiger Außenring nicht rotationssymmetrisch und axialsymmetrisch ausgebildet ist. Es ist auch vorgesehen, das sich die radialen und/oder axialen Abmessungen der Endabschnitte an einem Außenring voneinander unterscheiden. Dementsprechend angepasst weisen dann auch die Lagersitze eines Trägers zueinander unterschiedliche Abmessungen auf.

Der Träger 3 ist in Figur 2 dargestellt und ist aus zwei Trägerelementen 3a und 3b gebildet. Jedes der Trägerelemente 3a, 3b ist in dieser Anwendung ein schalenförmiges Umformteil aus Blech aus Kaltumformverfahren. Die Trägerelemente 3a und 3b sind mittels Blechverbindungen 3c aneinander befestigt. Es ist auch denkbar, dass die Radlagerung 4 an zwei nicht direkt aneinander verbundenen Trägern 3a und 3b befestigt ist. In jedem der Trägerelemente 3a und 3b ist jeweils eine der Lagersitze 12 bzw. 14 ausgebildet. In Figur 2 ist die Lagersitz 12 in der Vorform in Form der Öffnung 19 dargestellt.

Die Lagersitze 12 und 14 sind innerhalb einer Doppelung 17 bzw. 18 des Bleches ausgebildet. Die Doppelung 17, 18 ist durch einen von der jeweiligen Lagersitz 12, 14 radial nach außen von der Lagerdrehachse 1 a der Einheit 1 weg umgelegten und sich axial an das Blech 20 des Trägeelementes 3a, 3b anschließenden Anteil 20a des Bleches 20 gebildet. Die Kontur der Lagersitze 12, 14 innen beidseitig der Engstelle 22 ballig ausgeführt, siehe insbesondere Figur 1a. Der Innenquerschnitt der Engstelle 22 ist über die axiale Breite X zylindrisch kalibriert. Beidseitig der Engstelle, werden die Durchmesser I₁ bis Iₓ des freien Innenquerschnittes des Durchgangs 25 mit zunehmendem mit der Lagerdrehachse 1 a der Radlagerung 1 gleichgerichtetem axialen Abstand A₁ bis Aₓ, von der Engstelle 22 aus, zumindest in beide axiale Richtungen größer. In diesem Beispiel ist der maximale axiale Abstand Aₓ von der Engstelle 22 die halbe axiale Breite B des Lagersitzes 12, 14 im Durchgang 25. In der Darstellung nach Figur 1b ist die Engstelle 22 an einem konischen Lagersitz 23 ausgebildet und der maximale axiale Abstand Aₓ von der Engstelle 22 entspricht in diesem Fall der Breite B des Lagersitzes 23.

Die dem Lagersitz 12, 14 umfasste Außenkontur 24 eines in dem Lagersitz 12, 14 sitzenden Außenringes 5 liegt insbesondere mit den durch plastisches Umformen veränderten Endabschnitten 11, 13 an der Innenkontur 21 fest an.

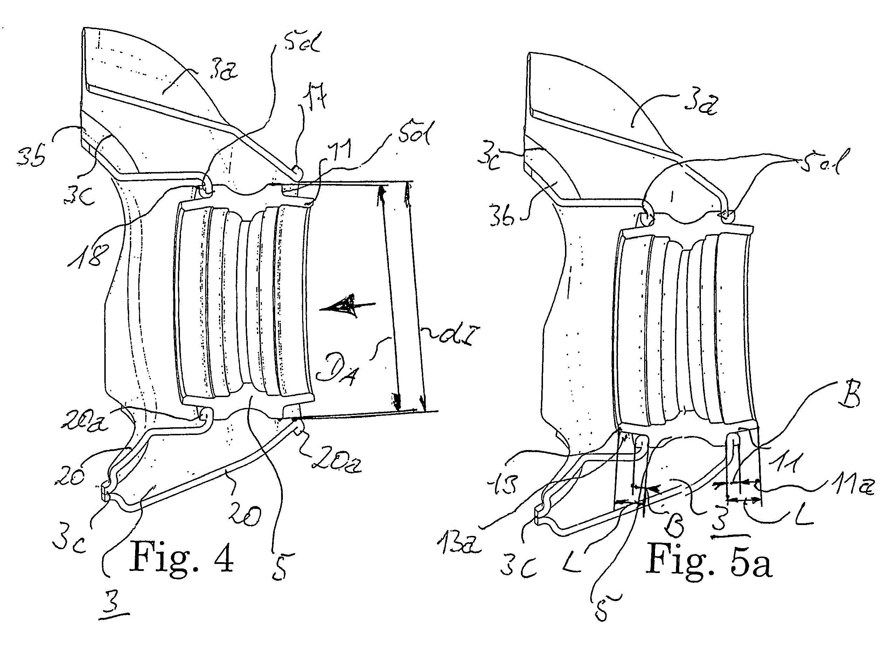

Bei der Montage des Außenringes 5 in den Träger 3 wird der Außenring 5 zunächst durch eine Öffnung 19 des Trägers 3 (des Trägerelementes 3b) in die mit dem Pfeil gekennzeichnete Richtung (Figur 4) hindurchgeführt und mit dem zweiten Endabschnitt 13 in die zweite Ausnehmung 14 eingeführt. Dabei ist es denkbar, dass der Endabschnitt 13 in die Ausnehmung 14 eingepresst oder auch mit einem Schiebepasssitz eingeführt wird. Die Öffnung 19 weist einen durch den Durchmesser dl beschriebenen Öffnungsquerschnitt auf. DI ist größer als der maximale Außendurchmesser DA des Außenringes 5. Der maximale Außendurchmesser DA beschreibt auch die Außenabmessung der Kreisringflächen an den Anschlägen 5d.

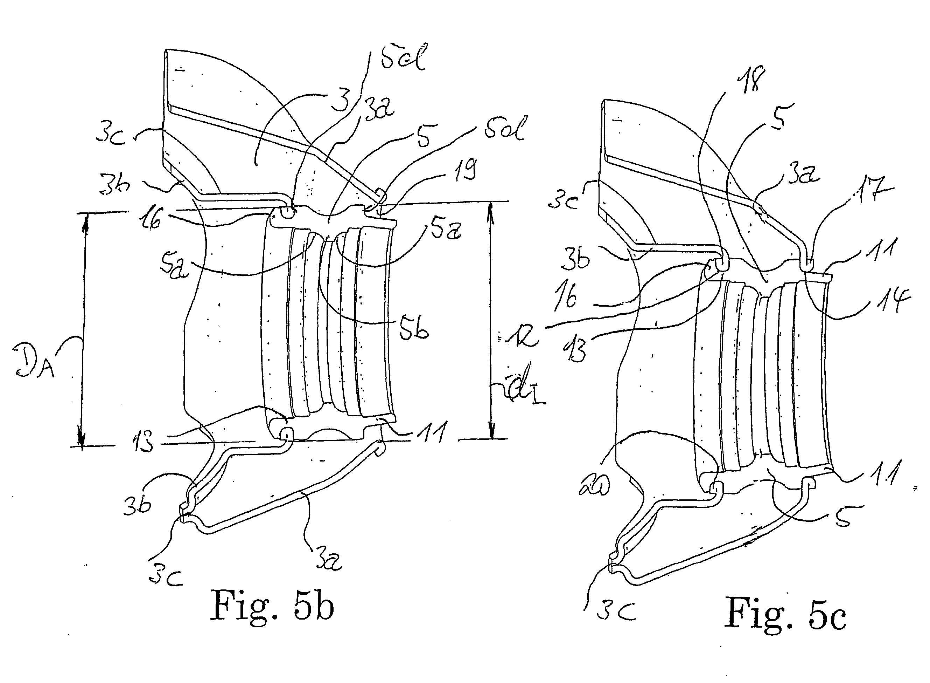

Die Montage der Baueinheit kann nach dem Einführen des zweiten Endabschnittes 13 in die zweite Lagersitz 14 wahlweise mit nachfolgend beschriebenen gleichwertigen Verfahrenschritten fortgesetzt werden:
- Nach einem der alternativen Verfahrensschritte ist der Außenring 5, wie in Figur 5b dargestellt, zunächst durch radiales Umlegen des zweiten Endes 16 aus dem Material des Endabschnittes 13, an einem der Axialanschläge 5d anliegend, an dem Träger 3 bzw. dem Trägerelement 3b befestigt. Es folgt diesem Schritt dann ein weiterer, bei dem die Öffnung 19 durch plastisches Umformen zur ersten Lagersitz 12 so eingeengt wird, dass die erste Lagersitz 12 den ersten Endabschnitt 11 umgreift. Dieser Zustand ist in Figur 5c bildlich dargestellt. Schließlich wird der Außenring 5 durch radiales Umlegen des ersten Endes 15 aus dem Material des Endabschnittes 11, an einem der Axialanschläge 5d anliegend, an dem Träger 3 bzw. dem Trägerelement 3b befestigt, so dass die in Figur 2 dargestellte Baueinheit 2 vorliegt.

- Nach dem anderen der alternativen Verfahrensschritte ist der Außenring 5, wie in Figur 5a dargestellt, zunächst axial zwischen den Trägerelementen 3a und 3b axial gehalten. Dazu wird die Öffnung 19 durch plastisches Umformen zur ersten Lagersitz 12 so eingeengt, dass die erste Lagersitz 12 den ersten Endabschnitt 11 umgreift. Schließlich wird der Außenring 5 durch radiales Umlegen des ersten Endes 15 aus dem Material des Endabschnittes 11 und durch zeitversetztes oder zeitsynchrones radiales Umlegen des zweiten Endes 16 aus dem Material des Endabschnittes 13, an einem der Axialanschläge 5d anliegend, an dem Träger 3 bzw. dem Trägerelement 3a bzw.3b befestigt, so dass die in Figur 2 dargestellte Baueinheit 2 vorliegt.

Wie aus den Darstellungen der Figuren 5a und 5b ersichtlich ist, sind die Endabschnitte vor der Befestigung des Außenringes in den Lagersitzen in axiale Richtung länger (L) als die jeweilige einem der Endabschnitte zugeordneten sowie lochförmig ausgebildeten Lagersitzen axial breit (B) sind (L > B). Der axial überstehende Anteil (Ringabschnitte 11 a und 13a) weist den Anteil an Material auf , der nach der Befestigung des Außenringes 5 an dem Träger 3 die radial umgelegten Enden 15 bzw. 16 bildet. An der fertig montierten Baueinheit durchgreift jeder der Endabschnitte 11, 13 eine der Ausnehmungen 12, 14 so axial, dass jeweils einer der Anschläge 5d und eines der Enden 15 bzw. 16 einen Teil des Trägers axial zwischen sich nehmen.

### Bezugszeichen

| | | | |
|---|---|---|---|
| 1 | Einheit | 11 | erster Endabschnitt |
| 1a | Lagerdrehachse | 11a | Ringabschnitt |
| 2 | Baugruppe | 12 | erster Lagersitz |
| 3 | Träger | 13 | zweiter Endabschnitt |
| 3a | Trägerelement | 13a | Ringabschnitt |
| 3b | Trägerelement | 14 | zweiter Lagersitz |
| 3c | Blechverbindung | 15 | Ende |
| 4 | Radlagerung | 16 | Ende |
| 5 | Außenring | 17 | Doppelung |
| 5a | Laufbahn | 18 | Doppelung |
| 5b | Mittelbord | 19 | Öffnung |
| 5c | Grundkörper | 20 | Blech |
| 5d | Anschlag | 20a | Anteil |
| 6 | Innenring | 21 | Innenkontur |
| 7 | Nabe | 22 | Engstelle |
| 8 | Flansch | 23 | Lagersitz |
| 9 | Wälzkörper | 24 | Außenkontur |
| 10 | Käfig | 25 | Durchgang |

## Patentansprüche

1. Einheit (1) aus einer Radlagerung (4) und aus wenigstens einem fahrzeugseitig festen Träger (3), wobei die Radlagerung (4) mit mindestens einem Außenteil (5) fest in wenigstens einem als axialer Durchgang (25) eines Blechformteils des Trägers (3) ausgebildeten Lagersitz (12, 14) sitzt, und wobei wenigstens ein Endabschnitt (11, 13) des Außenteils (5) zumindest durchgangsnah plastisch so radial umgelegt ist, dass der Endabschnitt (11, 13) den Träger (3) axial hintergreift, **dadurch gekennzeichnet, dass** der Durchgang (25) eine radiale Engstelle (22) aufweist, wobei der radiale Innenquerschnitt des Durchgangs (25) zumindest an einem Innenabschnitt mit abnehmendem axialen Abstand zu der Engstelle (22) hin zunehmend abnimmt, wobei der axiale Abstand von der Stelle aus, von der der Innenquerschnitt in Richtung der Engstelle (22) abzunehmen beginnt, zumindest der Hälfte der mit der Lagerdrehachse (1 a) gleichgerichteten maximalen axialen Breite des Durchgangs (25) entspricht, wobei weiter eine von dem Lagersitz (12, 14) umfasste Außenkontur eines in dem Lagersitz (12, 14) sitzenden Außenteils (5) der Radlagerung (4) zumindest von der Stelle aus sowie an der Engstelle (22) an der Innenkontur des Durchgangs (25) anliegt, und wobei ferner die Innenkontur so ballig ausgebildet ist, dass die Innenkontur zumindest an der Engstelle (22) um die Lagerdrehachse (1 a) umlaufend radial am weitesten in den Durchgang (25) hineinragt.

2. Einheit nach Anspruch 1, **dadurch gekennzeichnet, dass** das Außenteil (5) eine mit der Innenkontur des Durchgangs (25) korrespondierende und zumindest teilweise plastisch gegen die Innenkontur verformte Außenkontur aufweist.

3. Einheit nach Anspruch 1 oder 2, **dadurch gekennzeichnet, dass** das Außenteil (5) ein Außenring (5) der Radlagerung (4) mit wenigstens einer Laufbahn (5a) für Wälzkörper (9) ist und dass zumindest der Endabschnitt (11, 13) außen um die Lagerdrehachse (1a) der Radlagerung (4) rotationssymmetrisch ausgebildet ist.

4. Einheit nach Anspruch 1, **dadurch gekennzeichnet, dass** zwei der Durchgänge in dem Träger (3) ausgebildet sind.

5. Einheit nach Anspruch 1, **dadurch gekennzeichnet, dass** der Träger (3) wenigstens zwei der Blechformteile aufweist, wobei jedes der Blechformteile einen der Lagersitze (12, 14) aufweist.

## Claims

1. Unit (1) comprising a wheel bearing (4) and at least one vehicle-sided fixed support (3), the wheel bearing (4) being seated fixedly by way of at least one outer part (5) in at least one bearing seat (12, 14) which is formed as an axial passage (25) of a sheet metal formed part of the support (3), and at least one end section (11, 13) of the outer part (5) being folded over radially in a plastic manner at least near the passage, in such a way that the end section (11, 13) engages axially behind the support (3), **characterized in that** the passage (25) has a radial narrow point (22), the radial internal cross section of the passage (25) decreasing more and more at least at an inner section at a decreasing axial spacing from the narrow point (22), the axial spacing from the location, from which the internal cross section begins to decrease in the direction of the narrow point (22), corresponding to at least half the maximum axial width of the passage (25) which is oriented in the same direction as the bearing rotational axis (1a), furthermore an outer contour, which is surrounded by the bearing seat (12, 14), of an outer part (5) of the wheel bearing (4) which is seated in the bearing seat (12, 14) bearing against the inner contour of the passage (25) at least starting from the location and at the narrow point (22), and furthermore the inner contour being of spherical configuration in such a way that the inner contour protrudes radially the furthest into the passage (25) at least at the narrow point (22), in a circumferential manner about the bearing rotational axis (1a).

2. Unit according to Claim 1, **characterized in that** the outer part (5) has an outer contour which corresponds with the inner contour of the passage (25) and is deformed at least partially plastically against the inner contour.

3. Unit according to Claim 1 or 2, **characterized in that** the outer part (5) is an outer ring (5) of the wheel bearing (4) having at least one raceway (5a) for rolling bodies (9), and **in that** at least the end section (11, 13) is configured on the outside to be rotationally symmetrical about the bearing rotational axis (1a) of the wheel bearing (4).

4. Unit according to Claim 1, **characterized in that** two of the passages are formed in the support (3).

5. Unit according to Claim 1, **characterized in that** the support (3) has at least two of the sheet metal formed parts, each of the sheet metal formed parts having one of the bearing seats (12, 14).

## Revendications

1. Unité (1) constituée d'un palier de roue (4) et d'au moins un support (3) fixe côté véhicule, le palier de roue (4) reposant avec au moins une partie extérieure (5) fixement dans au moins un siège de palier (12, 14) réalisé sous la forme d'un passage axial (25) d'une partie moulée en tôle du support (3) et au moins un segment d'extrémité (11, 13) de la partie extérieure (5) étant couché au moins à proximité du passage dans le plan radial de telle sorte que le segment d'extrémité (11, 13) agrippe par l'arrière le support (3) dans le plan axial, **caractérisée en ce que** le passage (25) comporte un rétrécissement (22) radial, la section transversale intérieure radiale du passage (25) se rétrécissant de plus en plus au moins au niveau d'un segment intérieur avec un écartement axial décroissant par rapport au rétrécissement (22), l'écartement axial de l'endroit où la section transversale intérieure commence à se rétrécir en direction du rétrécissement (22) correspondant à au moins la moitié de la largeur axiale maximale du passage (25) rectifiée avec l'axe de rotation de palier (1a), un contour extérieur, intégrant le siège de palier (12, 14), d'une partie extérieure (5) du palier de roue (4) reposant dans le siège de palier (12, 14) reposant, au moins à cet endroit ainsi qu'au niveau du rétrécissement (22), contre le contour intérieur du passage (25) et le contour intérieur étant en outre si bombé que le contour intérieur ressort vers l'intérieur au moins au niveau du rétrécissement (22), autour de l'axe de rotation de palier (1a) s'étendant le plus largement dans le passage (25) dans le plan radial.

2. Unité selon la revendication 1, **caractérisée en ce que** la partie extérieure (5) comporte un contour extérieur correspondant au contour intérieur du passage (25) et déformé au moins en partie de façon plastique contre le contour intérieur.

3. Unité selon la revendication 1 ou 2, **caractérisée en ce que** la partie extérieure (5) d'une bague extérieure (5) du palier de roue (4) est au moins dotée d'une bande de roulement (5a) pour un rouleau (9) et qu'au moins le segment d'extrémité (11, 13) est réalisé de façon symétrique en rotation à l'extérieur autour de l'axe de rotation de palier (1a) du palier de roue (4).

4. Unité selon la revendication 1, **caractérisée en ce que** deux des passages sont réalisés dans le support (3).

5. Unité selon la revendication 1, **caractérisée en ce que** le support (3) comprend au moins deux des parties moulées en tôle, chacune des parties moulées en tôle comportant un des sièges de palier (12, 14).
